# EUROPEAN PATENT APPLICATION

(11) **EP 0 651 215 A1**
(43) Date of publication of application: **03.05.1995**
(21) Application number: 94203090.9
(22) Date of filing: 25.10.1994
(51) Int. Cl.: F25D 13/06, A23B 4/06, F25D 17/08, A22B 7/00, A22C 21/00

(54) **Cooling device, and method for cooling slaughtered animals**

(30) Priority: 29.10.1993 NL 9301871
(71) Applicant: Stork Bronswerk B.V., NL-3812 PJ Amersfoort (NL)
(72) Inventor: Jansen, Aart Johannes, NL-3852 NL Speuld (NL); Doornbos, Geert Jacob, NL-8031 JC Zwolle (NL)
(74) Representative: Bakkum, Ruben Joseph

(57) **Abstract**

Cooling device for cooling slaughtered animals (8, 9) which have been at least partially eviscerated, and the belly cavity of which forms an essentially closed space, comprising a cooling chamber (1) which is provided with conveyor means for conveying the animals through it, while cooling medium supply means are present for supplying a cooling medium to the animals, with one or more supply openings (4, 5), and it is possible to direct the cooling medium to be delivered thereby to the outside of the slaughtered animals (8, 9), essentially at the position of a part of the body with a relatively high heat content. The cooling medium supply means preferably also comprise one or more auxiliary supply openings (5, 7), by means of which at least some of the cooling medium to be delivered by them can be guided into the belly cavity (16) of the slaughtered animals (8, 9).

## Description

The present invention relates in the first place to a cooling device for cooling slaughtered animals which have been at least partially eviscerated, and the belly cavity of which forms an essentially closed space, at least comprising a cooling chamber which is provided with conveyor means for conveying the slaughtered animals to be cooled through the cooling chamber, while cooling medium supply means are present for supplying a cooling medium to the slaughtered animals.

Such a device is known, for example, from US-A-3,769,807. It is intended for cooling carcasses of animals which have just been slaughtered, following which the cooled product can be subjected to further processing, such as cutting, freezing and the like. The object of the above-mentioned device is to make cooling occur as rapidly as possible, in order to be able to limit the dimensions of the cooling device in a slaughter line. In this case carbon dioxide is sprayed as the cooling medium into the cooling chamber, in order to bring said chamber to a suitable temperature.

However, the abovementioned device has a number of major disadvantages. The cooling which can be achieved with the abovementioned device is not ideal, since the cooling of the chamber through which the slaughtered animals move is insufficient to achieve a uniform and rapid cooling of the animals. This means that the slaughtered animals still have to remain in the cooling chamber for a relatively long time, with the result that the cooling device has to be of considerable dimensions. There is also the risk that if the temperature of the cooling medium lies below freezing point, parts of the slaughtered animals will already be frozen before others are at the desired temperature.

The object of the present invention is to provide a cooling device which does not have the abovementioned disadvantages of the prior art, and to that end it is characterized in that the cooling medium supply means have one or more supply openings which are situated near the path to be taken by the slaughtered animals, and which are directed in such a way that the cooling medium to be delivered by them can be guided to the outside of the slaughtered animals, essentially at the position of a part of the body with a relatively high heat content.

Setting up the supply openings of the cooling medium supply means near the path to be taken by the slaughtered animals means that the cooling medium can be directed to those parts of the body of the slaughtered animals which require most cooling. Very rapid and uniform cooling of the slaughtered animals is achieved in this way. The dimensions of the cooling device can thus be reduced considerably compared with the devices known in the prior art.

The cooling device according to the invention is not greatly restricted as regards the slaughtered animals to be cooled, provided that the latter have been largely eviscerated and the belly cavity is still essentially closed. In other words, the body is essentially intact, and parts with high heat content, such as breast or thighs, are not divided into small pieces. The device is suitable for cooling large slaughtered animals, such as cows, pigs and the like, which have not yet been cut up into pieces, i.e. the belly cavity of which is still largely intact. The belly wall and the breast piece can already have been cut open in this case, and head and/or limbs can also have been removed. However, the device is suitable in particular for cooling poultry, since in the case of poultry such as chicken, turkey, ostrich and the like the belly wall does not have to be opened over a great length in order to be eviscerated.

In the case of poultry the belly wall is generally opened near the tail for evisceration. The belly cavity is often also opened at the neck part, in which case the neck can be removed or left in place.

During conveyance through the cooling chamber the slaughtered animals are also cooled on the outside by the cold air in the cooling chamber itself. The additional direct forced cooling of certain parts of the body by means of the directed supply of a cooling medium means that rapid, gradual and uniform cooling of the slaughtered animals is obtained. It is also possible to cool the slaughtered animals with a cooling medium at a temperature below -1°C to a temperature just above their freezing point, without certain parts of the animals already being frozen while other parts are still insufficiently cooled.

Parts of the body with a relatively high heat content should be understood as those parts which require relatively great cooling. In the case of poultry these parts are in order of decreasing heat content the breast, the thighs, the head (if present) and the tail part. In the case of larger animals such as pigs and cows this order is thighs (including buttocks), shoulders and head (if present), and in the case of small game such as rabbits this order is thighs, head (if present) and shoulders.

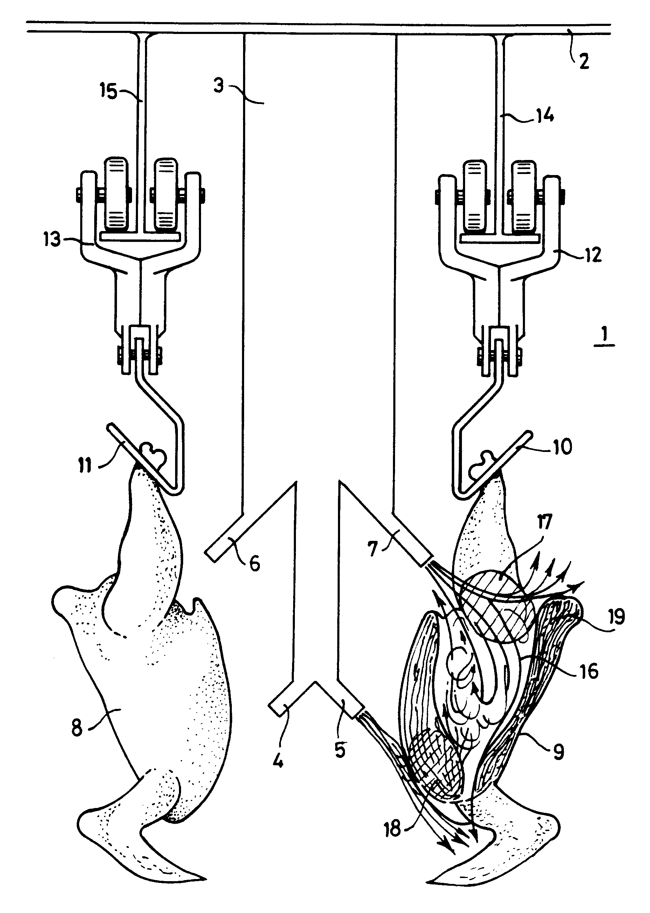

In order to improve the cooling of the slaughtered animals, in particular at the position of the abovementioned parts of the body with relatively high heat content, the cooling medium supply means also comprise one or more auxiliary supply openings which are directed in such a way that at least some of the cooling medium to be delivered by them can be guided into the belly cavity of the slaughtered animals. This means that while the slaughtered animals are moving through the cooling chamber they are subjected to forced cooling from close up, both internally and externally. This is advantageous from the point of view of saving cooling medium, saving material, saving space in the cooling device and the efficiency of the cooling medium during cooling of the slaughtered animals. All this will be explained in greater detail in the description of the drawing. The cooling medium supply means are not particularly restricted and can be of any type known to the person skilled in the art, such as supply pipes, channels or the like.

The supply openings can be in many different forms, but they are preferably slit-shaped and extend in the envisaged direction of movement of the slaughtered animals. The supply openings can also be in the form of nozzles or the like.

However the advantage of a slit shape is that there is very uniform supply of cooling medium to slaughtered animals moving past the slits.

The cooling medium supply means are advantageously designed in such a way that the cooling device, viewed in the envisaged direction of movement of the slaughtered animals, is divided into two or more cooling regions, and the type of cooling medium to be supplied can be set in each region. This means that the temperature of the cooling medium supplied can increase gradually in the cooling chamber from an inlet to an outlet thereof, with the result that very efficient cooling of the slaughtered animals can be carried out. For this purpose, the cooling chamber can, if desired, be divided into several separate chambers with separate cooling medium supply means, but the cooling medium supply means can also be subdivided in one chamber in such a way that the inlets can be supplied with cooling media of different temperatures.

Slaughtered animals can be cooled very rapidly, and even frozen if desired, by means of the cooling device according to the invention.

The invention also provides a method for cooling slaughtered animals which are at least partially eviscerated, and the belly cavity of which forms an essentially closed space, in which method the slaughtered animals are conveyed through a cooling chamber while a cooling medium is supplied thereto, and which method is characterized in that the cooling medium is guided to the outside of the slaughtered animals essentially at the position of parts of the body with a high heat content.

Cooling medium is preferably also guided into the belly cavity of the slaughtered animals, with the above-mentioned advantages.

The temperature of the cooling medium supplied preferably increases in the direction of movement of the slaughtered animals, with the result that very rapid cooling is ensured, while freezing of certain parts can be prevented. This is, of course, an advantage only if the slaughtered animals are to be cooled and not frozen.

The cooling medium used is advantageously cooled air, a cooling medium which is hygienic and simple to use. The air preferably has a high moisture content of 80% or more, in particular 90% or more. In this way, in the first place excellent heat transfer between the slaughtered animals and the cooling medium is obtained, while the animals are also prevented from drying out on the outside. The accelerated cooling by the method according to the invention has the additional advantage of a reduced risk of drying out.

The method is not greatly restricted to a type of slaughtered animal to be cooled, but it is particularly advantageous for cooling poultry.

The invention will be explained in greater detail below with reference to the appended drawing, which comprises a figure showing a diagrammatic embodiment of the cooling device according to the invention.

In the single figure a cooling chamber is indicated diagrammatically by 1 and has a top wall 2, to which an air tank 3 is fixed, which tank comprises four cooling medium supply openings; two supply openings 4 and 5 for guiding a cooling medium along the outside, and two auxiliary supply openings 6 and 7 for guiding cooling medium into the belly cavity. Two slaughtered chickens 8 and 9 which have been eviscerated are shown diagrammatically in the figures, attached by the legs to attachment hooks 10 and 11, which are in turn connected to conventional conveyor parts 12 and 13 respectively, which can be moved in a known manner along suitably shaped guide tracks 14 and 15 respectively.

In the figure chicken 9 is shown partially in section. The parts in question, i.e. a belly cavity 16, a thighbone 17, a breast piece 18 and a tail part 19, are shown. The supply opening 5 in this case blows air as the cooling medium against the breast part 18. The air stream is indicated by arrows. The temperature of said air stream is not particularly limited and depends on the speed of movement of the chicken in question, the dimensions of the cooling chamber and the rate of flow the air stream. An additional air stream is guided into the belly cavity 16 by means of the auxiliary supply opening 7, which air stream serves to cool not only the breast piece from the inside, but also the thighbone part and the tail piece. The back part of the chicken and the tail piece are also cooled on the outside by cold air which is present in the cooling chamber and which flows along it through movement of the chickens.

Corresponding air streams emerge from the supply openings 4 and 6 at the other side of the air tank 3 for cooling the chicken 8. By means of the device according to the invention, the relatively thick parts of the body of the slaughtered animals are thus cooled on both sides.

The air tank is preferably elongated in shape and extends essentially over the full length of the guide tracks 14 and 15, while the air supply openings 4 - 7 are advantageously in the form of slit-shaped openings extending in the lengthwise direction.

As is known in the case of many cooling devices, the guide tracks 14 and 15 can move through the cooling chamber in a meandering fashion, depending on the time which the slaughtered animals require therein, and the air tanks or other type of cooling medium supply means can be designed accordingly, so that cooling occurs essentially along the entire movement path of the slaughtered animals through the cooling chamber.

The cooling chamber 1 can have additional cooling means, or can be cooled solely by means of the cooled air from the air tank.

With the device and method according to the invention, a time saving of approximately a factor of 3 is obtained compared with the prior art, i.e. cooling of slaughtered animals through conveyance through a cooling chamber with an essentially uniform air stream. Moreover, through the use of relatively moist air, which is just below condensation point, less drying out of the slaughtered animals occurs, which means less weight loss in the animals during cooling and also provides more tender meat.

## Claims

1. Cooling device for cooling slaughtered animals which have been at least partially eviscerated, and the belly cavity of which forms an essentially closed space, at least comprising a cooling chamber which is provided with conveyor means for conveying the slaughtered animals to be cooled through the cooling chamber, cooling medium supply means being present for supplying a cooling medium to the slaughtered animals, **characterized in that** the cooling medium supply means have one or more supply openings (4, 5) which are situated near the path to be taken by the slaughtered animals (8, 9), and which are directed in such a way that the cooling medium to be delivered by them can be guided to the outside of the slaughtered animals (8, 9), essentially at the position of a part of the body with a relatively high heat content.

2. Cooling device according to claim 1, **characterized in that** the cooling medium supply means also comprise one or more auxiliary supply openings (5, 7), which are directed in such a way that at least some of the cooling medium to be delivered by them can be guided into the belly cavity (16) of the slaughtered animals (8, 9).

3. Cooling device according to claim 1 or 2, **characterized in that** the supply openings (4, 5, 6, 7) are slit-shaped and extend in the envisaged direction of movement of the slaughtered animals (8, 9).

4. Cooling device according to one or more of the preceding claims, **characterized in that** the cooling medium supply means are designed in such a way that the cooling device, viewed in the envisaged direction of movement of the slaughtered animals (8, 9), is divided into two or more cooling regions and the type of cooling medium to be supplied can be set in each region.

5. Method for cooling slaughtered animals which are at least partially eviscerated, and the belly cavity of which forms an essentially closed space, in which method the slaughtered animals are conveyed through a cooling chamber while a cooling medium is supplied thereto, **characterized in that** the cooling medium is guided to the outside of the slaughtered animals essentially at the position of a part of the body with a high heat content.

6. Method according to claim 5**, characterized in that** cooling medium is also guided into the belly cavity of the slaughtered animals.

7. Method according to claim 5 or 6, **characterized in that** the temperature of the cooling medium supplied increases in the direction of movement of the slaughtered animals.

8. Method according to one or more of claims 5-7, **characterized in that** cooled air is used as the cooling medium.
